# EUROPEAN PATENT APPLICATION

(11) **EP 4 768 104 A1**
(43) Date of publication of application: **01.07.2026**
(21) Application number: 25220136.3
(22) Date of filing: 02.12.2025
(51) Int. Cl.: A63F 13/22, A63F 13/42

(54) **INFORMATION PROCESSING METHOD, INFORMATION PROCESSING SYSTEM, AND COMPUTER PROGRAM**

(30) Priority: 26.12.2024 JP 2024231128
(71) Applicant: Nintendo Co., Ltd., Kyoto 601-8501 (JP)
(72) Inventor: YASUDA, Shumpei, Kyoto, 601-8501 (JP); NARUSE, Fumisato, Kyoto, 601-8501 (JP); KOBAYASHI, Masato, Kyoto, 601-8501 (JP); AOKI, Ryoma, Kyoto, 601-8501 (JP); KATO, Shiro, Kyoto, 601-8501 (JP)
(74) Representative: Bardehle Pagenberg Partnerschaft mbB Patentanwälte Rechtsanwälte

(57) **Abstract**

A computer is caused to: acquire first data based on a two-dimensional operation position of a stick of an input device including a mouse sensor at a bottom portion thereof, the stick being provided at a side portion connected to the bottom portion; and make a first response including second data generated based on the first data, in response to a first request from an application being executed. The second data indicates a value that (i) has a greater absolute value as a two-dimensional operation position of the stick becomes farther from an initial position of the stick, (ii) indicates a negative value when the two-dimensional operation position of the stick is within a first range, and (iii) indicates a positive value when the two-dimensional operation position of the stick is within a second range on the opposite side of the first range across the initial position.

## Description

### CROSS REFERENCE TO RELATED APPLICATION

This application claims priority to Japanese Patent Application No. 2024-231128 filed on December 26, 2024, the entire contents of which are incorporated herein by reference.

### BACKGROUND OF THE INVENTION

### Field of the Invention

The present disclosure relates to processing of data based on an operation on an input device.

### Description of the Background Art

Conventionally, input devices such as game controllers have been known.

There is room for improvement in the handling of data based on an operation on an input device including a mouse sensor and a stick.

### SUMMARY OF THE INVENTION

For example, the following configuration examples are exemplified.

A first configuration example is directed to an information processing method including: acquiring first data based on a two-dimensional operation position of a stick of an input device including a mouse sensor at a bottom portion thereof, the stick being provided at a side portion connected to the bottom portion; and making a first response including second data generated based on the first data, in response to a first request from an application being be executed, wherein the second data indicates a value that (i) has a greater absolute value as a two-dimensional operation position of the stick becomes farther from an initial position of the stick, (ii) indicates a negative value when the two-dimensional operation position of the stick is within a first range, and (iii) indicates a positive value when the two-dimensional operation position of the stick is within a second range on the opposite side of the first range across the initial position.

In a second configuration example based on the first configuration example, the first range may include a two-dimensional operation position when the stick is operated from the initial position in a downward direction toward the bottom portion, and the second range may include a two-dimensional operation position when the stick is operated from the initial position in an upward direction opposite to the downward direction.

In a third configuration example based on the second configuration example, the first range may include a two-dimensional operation position when the stick is operated from the initial position in one direction in a front-rear direction perpendicular to an up-down direction, and the second range may include a two-dimensional operation position when the stick is operated from the initial position in another direction in the front-rear direction.

In a fourth configuration example based on the third configuration example, the first range may be included on one side of a straight line passing through the initial position of the stick and inclined by 45 degrees from a straight line connecting the upward direction and the downward direction, and the second range may be included on another side of the straight line.

In a fifth configuration example based on the fourth configuration example, a two-dimensional position of the stick on the one side of the straight line may be in the first range, and a two-dimensional position of the stick on the other side of the straight line may be in the second range.

In a sixth configuration example based on the second configuration example, the first response may include third data generated based on the first data, the third data may indicate a value that (i) has a greater absolute value as a two-dimensional operation position of the stick becomes farther from the initial position of the stick, (ii) indicates a negative value when the two-dimensional operation position of the stick is within a third range, and (iii) indicates a positive value when the two-dimensional operation position of the stick is within a fourth second range on the opposite side of the third range across the initial position, the third range may include a two-dimensional operation position when the stick is operated from the initial position in one direction in a front-rear direction perpendicular to an up-down direction, and the fourth range may include a two-dimensional operation position when the stick is operated from the initial position in another direction in the front-rear direction.

In a seventh configuration example based on the sixth configuration example, a part of the first range and a part of one of the third range and the fourth range may overlap, and a part of the second range and a part of the other of the third range and the fourth range may overlap.

In an eighth configuration example based on the sixth configuration example, the first range, the second range, the third range, and the fourth range may not overlap.

In a ninth configuration example based on the first to eighth configuration examples, the information processing method may further include generating the second data, based on the first data, every generation period while the two-dimensional operation position of the stick is the same.

In a tenth configuration example based on the first to ninth configuration examples, the information processing method may further include making the first response in response to the first request from a game application being executed.

In an eleventh configuration example based on the first to tenth configuration examples, the information processing method may further include making a second response including fourth data indicating the two-dimensional operation position of the stick, in response to a second request from the application being executed.

In a twelfth configuration example based on the first to eleventh configuration examples, the information processing method may further include acquiring the first data of the input device not including a mouse wheel.

Each configuration example described above may be applied to a computer program or an information processing system.

### BRIEF DESCRIPTION OF THE DRAWINGS

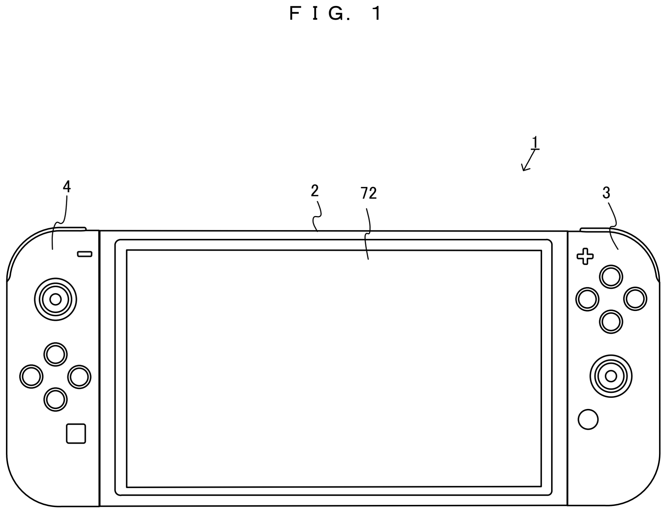

FIG. 1 is a diagram showing a non-limiting example of a state where a right controller 3 and a left controller 4 are attached to a main body apparatus 2;
FIG. 2 is six orthogonal views showing a non-limiting example of the right controller 3;
FIG. 3 is six orthogonal views showing a non-limiting example of the left controller 4;
FIG. 4 is a block diagram showing a non-limiting example of the configuration of the main body apparatus 2;
FIG. 5 is a block diagram showing a non-limiting example of the configurations of the main body apparatus 2, the right controller 3, and the left controller 4;
FIG. 6 is a diagram showing a non-limiting example of a state where the right controller 3 is operated with a right hand put thereon;
FIG. 7 is a diagram showing a non-limiting example of a state where the right controller 3 is operated while being grasped by a right hand;
FIG. 8 is a diagram showing a non-limiting example of a state where the right controller 3 is operated while being grasped by both hands;
FIG. 9 is a functional block diagram showing a non-limiting example of functions;
FIG. 10A is a diagram for describing a non-limiting example of wheel data;
FIG. 10B is a diagram for describing a non-limiting example of the wheel data;
FIG. 11A is a diagram showing a non-limiting example of mouse button data;
FIG. 11B is a diagram showing a non-limiting example of the mouse button data;
FIG. 12 is a diagram showing a non-limiting example of various data;
FIG. 13 shows a non-limiting example of a sequence;
FIG. 14 is a functional block diagram showing a non-limiting example of functions;
FIG. 15 is a diagram for describing a non-limiting example of the wheel data;
FIG. 16 is a diagram for describing a non-limiting example of the wheel data;
FIG. 17 is a diagram for describing a non-limiting example of the wheel data;
FIG. 18 is a diagram for describing a non-limiting example of the wheel data; and
FIG. 19 is a diagram for describing a non-limiting example of the wheel data.

### DESCRIPTION OF THE PREFERRED EMBODIMENTS

Hereinafter, an exemplary embodiment will be described.

### [Example of hardware configuration of information processing system]

Hereinafter, a game system which is an example of an information processing system will be described. A game system 1 according to the exemplary embodiment includes a main body apparatus 2, a left controller 4, and a right controller 3. The main body apparatus 2 is an example of an information processing apparatus. The information processing apparatus may be, for example, a personal computer, a tablet terminal, a smartphone, a wearable terminal, a server, or the like. The left and right controllers 3 and 4 are examples of an input device. The input device may be, for example, a general-purpose mouse. The input device is also an example of the information processing apparatus. The information processing apparatus and the input device are examples of a computer. The term "computer" does not necessarily mean one device and can mean the entirety of a plurality of devices connected via a wire or wirelessly. Each of such information processing apparatuses and input devices can be an example of the information processing system.

The main body apparatus 2 is an apparatus for executing various kinds of processing (e.g., game processing) in the game system 1. The main body apparatus 2 includes a display 72.

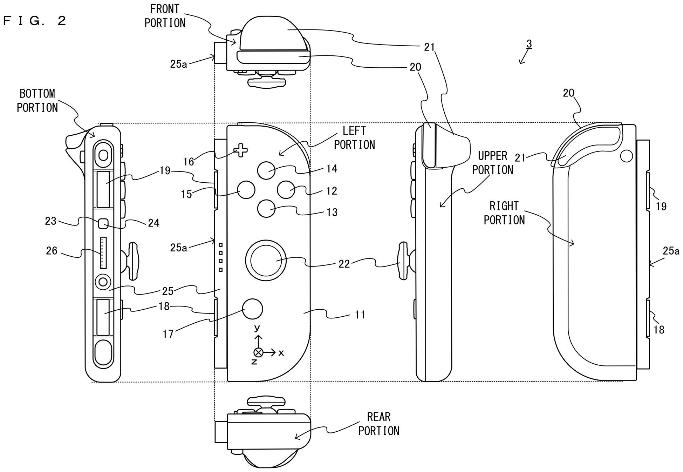

The left controller 4 and the right controller 3 are each an input device including operation portions and the like on which a user performs input. Hereinafter, the left controller 4 and the right controller 3 are sometimes collectively referred to as "controller". FIG. 2 is six orthogonal views schematically showing an example of the right controller 3. As shown in FIG. 2, the right controller 3 has a vertically long plate shape, has a housing 11, and has a front portion, a rear portion, an upper portion, a bottom portion, a right portion, and a left portion. As described later, an opening for a mouse sensor is provided in the bottom portion. In the right controller 3, the rear portion is located on a side opposite to the front portion, the bottom portion is located on a side opposite to the upper portion, and the left portion is located on a side opposite to the right portion. The distance between the front portion and the rear portion is larger than the distance between the upper portion and the bottom portion. The distance between the upper portion and the bottom portion is larger than the distance between the right portion and the left portion. In another exemplary embodiment, these distances may have another magnitude relationship. In the exemplary embodiment, a direction connecting the bottom portion and the upper portion is referred to as an up-down direction, a direction perpendicular to the up-down direction and connecting the front portion and the rear portion is referred to as a front-rear direction, and a direction perpendicular to the up-down direction and connecting the right portion and the left portion is referred to as a left-right direction. In FIG. 2, x, y, and z axes are shown on a front view in which the left portion faces the near side, and represent a coordinate system of the right controller 3. In this coordinate system, a direction heading toward the right portion from the left portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. In the exemplary embodiment, portions such as the front portion and the bottom portion need not be perfectly flat, and may have a recess, a projection, and/or a slope. For example, the bottom portion includes a protruding portion 25 described later. A direction in which each portion faces and a direction connecting the portions are shown as approximate directions.

The right controller 3 has the protruding portion 25 which is fitted into a recessed portion (not shown) of the main body apparatus 2 in a state where the right controller 3 is attached to the main body apparatus 2. As shown in FIG. 2, the protruding portion 25 has a protruding shape protruding in the x-axis minus direction and having a left-right width shorter than that of the right controller 3 and a front-rear width shorter than that of the right controller 3. In the exemplary embodiment, the protruding portion 25 is a part of the bottom portion.

As described later, the right controller 3 can be grasped in an orientation in which the right controller 3 is vertically long, in a state of being detached from the main body apparatus 2. The right controller 3 has such a shape and a size that the right controller 3 can be grasped by one hand, in particular, a right hand, in a case of being grasped in the orientation in which the right controller 3 is vertically long. The right controller 3 can also be grasped in an orientation in which the right controller 3 is horizontally long, and may be grasped by both hands in a case of being grasped in the orientation in which the right controller 3 is horizontally long.

The right controller 3 has, at the left portion, an analog stick (sometimes simply referred to as a "stick") 22 which is an example of a directional input portion. The stick 22 can be used as a directional input portion via which a direction can be inputted. The user can perform directional input corresponding to a tilt direction by tilting the stick 22 in a desired direction in a range of 360 degrees, and can perform input with a magnitude corresponding to the tilt angle. In addition, the user can perform button input by pushing the stick 22 in. The stick may be slidable, instead of being tiltable. The directional input portion may, for example, be a directional pad or a slide pad.

The right controller 3 has, at the left portion, a set of four buttons which are an A button 12, a B button 13, an X button 14, and a Y button 15, a + (plus) button 16, and a home button 17. The right controller 3 has an R button 20 and a ZR button 21 over a range from the front portion to the upper portion. The R button 20 and the ZR button 21 may be provided at only the front portion of the right controller 3, or may be provided only at the upper portion of the right controller 3. The right controller 3 has a button 18 and a button 19 at a top surface 25a of the protruding portion 25. The right controller 3 has no operation portion at the rear portion.

The right controller 3 has an opening 23 for a mouse sensor, at the top surface 25a of the protruding portion 25. The opening 23 for a mouse sensor is an opening of a light guide path for guiding light to a mouse sensor 24 provided inside the right controller 3. The mouse sensor 24 is an optical mouse sensor and includes at least a light receiving portion. Light to be detected by the light receiving portion may be visible light or light having an invisible wavelength. The mouse sensor 24 may include a light emitting portion. Light from the light emitting portion may be emitted through the opening 23 to the outside. The mouse sensor 24 acquires data that enables calculation of movement or the like, on a placement surface, of the right controller 3 placed such that the top surface 25a of the protruding portion 25 of the bottom portion faces the placement surface. Thus, the right controller 3 can be used also as a mouse. In the exemplary embodiment, the direction in which the bottom portion extends when the right controller 3 is placed on the placement surface with the top surface 25a facing the placement surface is parallel to the direction in which the placement surface extends.

In the exemplary embodiment, the right controller 3 has, at the protruding portion 25, a terminal 26 for the right controller 3 to perform wired communication with the main body apparatus 2. The terminal 26 is provided on the inner peripheral surface of a recess formed in the top surface 25a of the protruding portion 25, for example.

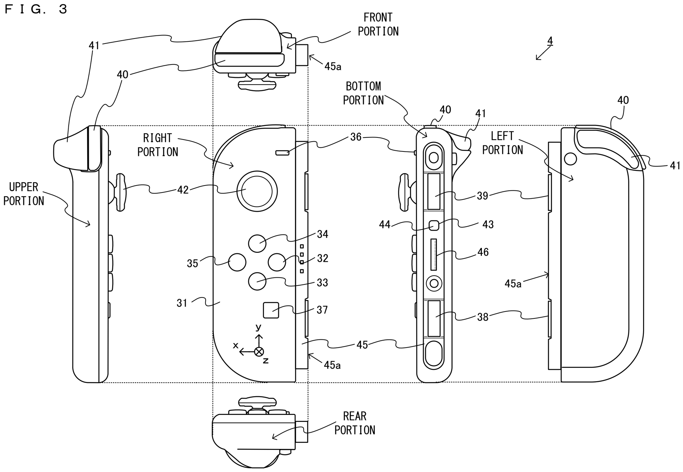

FIG. 3 is six orthogonal views schematically showing an example of the left controller 4. The description of similar configurations as those of the right controller 3 is omitted. The left controller 4 has, at a right portion, a stick 42, a set of four buttons which are a right direction button 32, an up direction button 33, a down direction button 34, and a left direction button 35, a capture button 37, and a - (minus) button 36. The buttons 32 to 35 may be one directional pad. The left controller 4 has no operation portion at the rear portion. In the right controller 3, the stick 22 is located rearward of the buttons 12 to 15, whereas in the left controller 4, the stick 42 is located frontward of the buttons 32 to 35. In FIG. 3, x, y, and z axes are shown on a front view in which the right portion faces the near side, and represent a coordinate system of the left controller 4. In this coordinate system, a direction heading toward the left portion from the right portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other.

The left controller 4 has a protruding portion 45 which is fitted into a recessed portion (not shown) of the main body apparatus 2 in a state where the left controller 4 is attached to the main body apparatus 2. As with the right controller 3, the protruding portion 45 includes buttons 38 and 39, a mouse sensor 44, and a terminal 46.

As with the right controller 3, the left controller 4 can be grasped in an orientation in which the left controller 4 is vertically long or horizontally long, in a state of being detached from the main body apparatus 2.

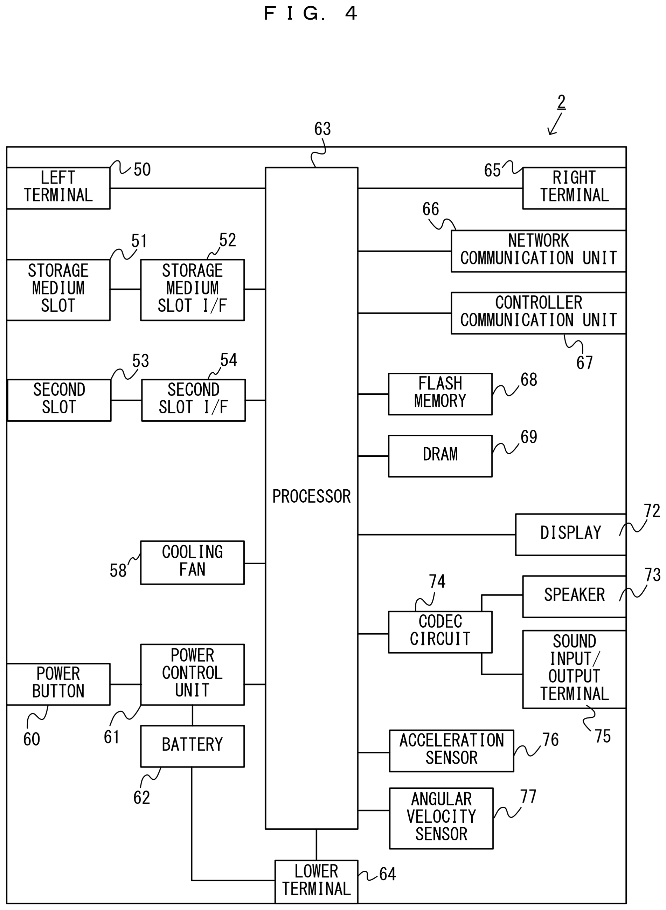

FIG. 4 is a block diagram showing an example of the internal configuration of the main body apparatus 2. The main body apparatus 2 includes a processor 63. The processor 63 is an information processing unit which executes various kinds of information processing to be executed in the main body apparatus 2. The processor 63 may be composed of, for example, a plurality of processors and cores, or typically, a plurality of CPUs (Central Processing Units) and cores, or may be formed by a SoC (System-on-a-chip) including a plurality of functions such as a CPU function and a GPU (Graphics Processing Unit) function. In the exemplary embodiment, the term "processor" may include at least a CPU (Central Processing Unit), a GPU (Graphics Processing Unit), an ASIC (Application Specific Integrated Circuit), an FPGA (Field Programmable Gate Array), etc. The processor 63 executes various kinds of information processing by executing a program (e.g., a program for executing a game application, etc.) stored in a storage unit (e.g., an internal storage medium such as a flash memory 68, an external storage medium attached to a slot 51 or the like, etc.).

The main body apparatus 2 includes the flash memory 68, and a DRAM (Dynamic Random Access Memory) 69, as an example of an internal storage medium. The flash memory 68 is a memory that is mainly used for storing various data to be stored in the main body apparatus 2. The DRAM 69 is a memory that is mainly used for temporarily storing various data to be used in information processing. The processor 63 reads and writes data from and into storage media such as the flash memory 68 and the DRAM 69 as appropriate, to execute various kinds of information processing. In the exemplary embodiment, the term "memory" may include at least a flash memory and a DRAM, and may include another storage medium.

The main body apparatus 2 includes various components as shown in FIG. 4. Hereinafter, the components will be briefly described. A storage medium slot interface (sometimes referred to as "slot I/F") 52 performs reading/writing of data from/into a storage medium (e.g., a dedicated memory card) attached to the storage medium slot 51, in response to an instruction from the processor 63. A second slot I/F 54 performs reading/writing of data from/into a storage medium attached to a second slot 53, in response to an instruction from the processor 63.

A network communication unit 66 performs communication (e.g., Internet communication using wireless communication) with an external device via a network. A controller communication unit 67 performs wireless communication (e.g., communication compliant with the standard of Bluetooth (registered trademark)) with the left controller 4 and/or the right controller 3.

A left terminal 50 is a terminal for performing wired communication between the processor 63 and the left controller 4. A right terminal 65 is a terminal for performing wired communication between the processor 63 and the right controller 3. A lower terminal 64 is a terminal for performing communication with another apparatus (e.g., a stationary monitor) via a cradle when the lower terminal 64 is attached to the cradle, for example.

A codec circuit 74 controls input and output of sound data to and from a speaker 73 and a sound input/output terminal 75.

A power control unit 61 controls supply of power from a battery 62 to each unit of the main body apparatus 2 (i.e., each of units to be supplied with power from the battery 62), based on an instruction from the processor 63, and starts or stops supply of power in response to pressing of a power button 60.

The main body apparatus 2 includes various sensors such as an acceleration sensor 76 and an angular velocity sensor 77. The processor 63 can execute various kinds of processing, based on information from these sensors.

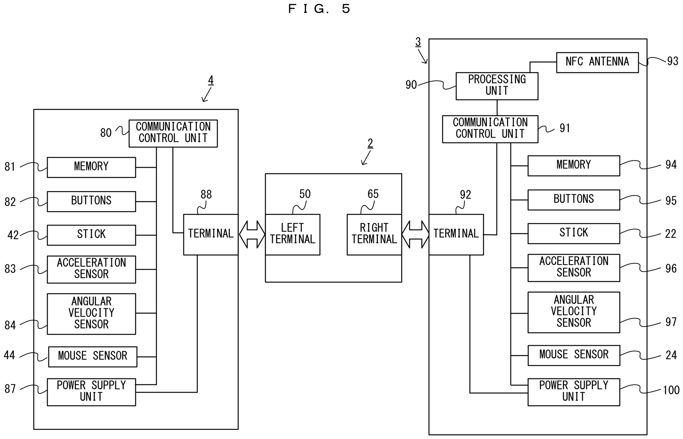

FIG. 5 is a block diagram showing an example of the configurations of the main body apparatus 2, the left controller 4, and the right controller 3. The details of the configuration of the main body apparatus 2 have already been shown in FIG. 4 and therefore are not shown in FIG. 5.

The left controller 4 includes a communication control unit 80 which performs communication with the main body apparatus 2. As shown in FIG. 5, the communication control unit 80 is connected to various components including a terminal 88. In a state where the left controller 4 is attached to the main body apparatus 2, the communication control unit 80 performs wired communication with the main body apparatus 2 via the terminal 88, and in a state where the left controller 4 is detached from the main body apparatus 2, the communication control unit 80 performs wireless communication (e.g., communication compliant with the standard of Bluetooth (registered trademark)) with the main body apparatus 2.

The left controller 4 includes a memory 81 such as a flash memory, for example. The communication control unit 80 is formed by a processor such as a microcomputer (or a microprocessor), for example, and executes various kinds of processing by executing firmware stored in the memory 81.

The communication control unit 80 acquires information about operations performed on each button 82 and the stick 42.

The left controller 4 includes an inertial sensor. Specifically, the left controller 4 includes an acceleration sensor 83 and an angular velocity sensor 84. The acceleration sensor 83 and the angular velocity sensor 84 are connected to the communication control unit 80. The communication control unit 80 repeatedly acquires detection results from the acceleration sensor 83 and the angular velocity sensor 84 at appropriate timings. The inertial sensor may be one of the acceleration sensor and the angular velocity sensor or may be another sensor.

The left controller 4 includes the mouse sensor 44. The mouse sensor 44 acquires data for calculating movement or the like of the left controller 4 placed on a placement surface. The communication control unit 80 repeatedly acquires the data acquired by the mouse sensor 44, at appropriate timings.

The communication control unit 80 transmits left controller data including acquired information or information obtained by performing predetermined processing on the acquired information, to the main body apparatus 2. The left controller data may be repeatedly transmitted at predetermined timings. For example, the communication control unit 80 may transmit the left controller data in response to a data request repeatedly received from the main body apparatus 2 at predetermined timings.

The left controller 4 includes a power supply unit 87. The power supply unit 87 includes a battery and a power control circuit. The power control circuit is connected to the battery and supplies power to each unit of the left controller 4 (specifically, each of units to be supplied with power from the battery).

As shown in FIG. 5, the right controller 3 has a configuration similar to the left controller 4. For example, the right controller 3 includes a communication control unit 91 which is composed of a processor or the like and performs communication with the main body apparatus 2. The right controller 3 includes a memory 94 connected to the communication control unit 91. The communication control unit 91 is connected to components including a terminal 92. The communication control unit 91 and the memory 94 have the same functions as the communication control unit 80 and the memory 81 of the left controller 4. Therefore, the communication control unit 91 is capable of performing communication with the main body apparatus 2 by both of wired communication via the terminal 92 and wireless communication not via the terminal 92, and controls communication that the right controller 3 performs with the main body apparatus 2. For example, the communication control unit 91 acquires information about operations performed on each button 95 and the stick 22 and transmits the information to the main body apparatus 2.

The right controller 3 includes a processing unit 90 and an NFC antenna 93. The processing unit 90 controls the NFC antenna 93 in accordance with an instruction from the main body apparatus 2 via the communication control unit 91. The NFC antenna 93 performs short-range wireless communication based on the standard of NFC (Near Field Communication).

For at least the right controller 3 and the left controller 4, the main body apparatus 2 may have various data regarding these controllers in advance. For example, the right controller 3 and the left controller 4 are each allocated with controller type information at the time of manufacturing, and the main body apparatus 2 may have various kinds of information together with the controller type information.

### [Manner of Grasping Controller]

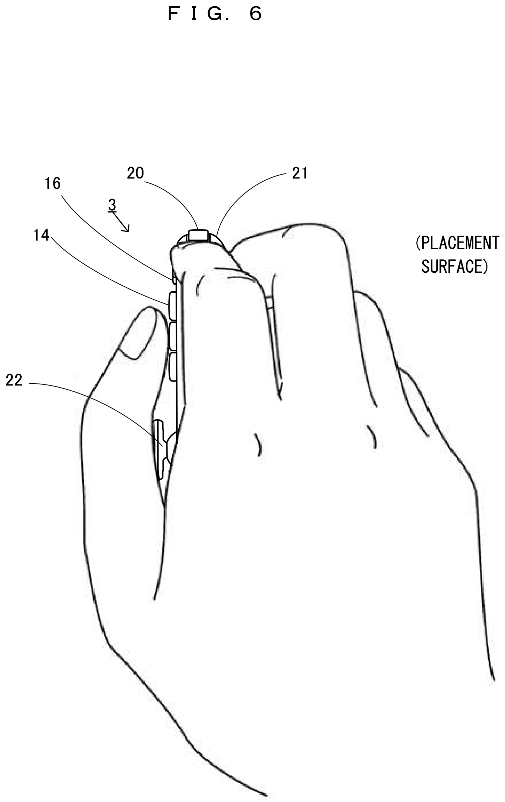

FIG. 6 is a schematic view showing an example of a state where the user places the right controller 3 on a placement surface and uses the right controller 3 as a mouse with the right hand put thereon. As shown in FIG. 6, the front portion of the right controller 3 faces frontward and the left portion thereof faces leftward. The palm of the right hand of the user covers the upper portion side of the right controller 3. The thumb of the right hand of the user is placed on the left portion side of the right controller 3. The thumb of the right hand of the user is put on the A button 12, for example. The index finger of the right hand of the user is put on the R button 20, for example, and the middle finger of the right hand of the user is put on the ZR button 21, for example. The user can operate the R button 20 and the ZR button 21 by the index finger or the middle finger of the right hand. The user can operate each input portion provided at the left portion, by the thumb of the right hand. Also, when the user uses the left controller 4 as a mouse by the left hand, the user can use the left controller 4 on a placement surface with the left hand put thereon in the same manner. At this time, the right portion of the left controller 4 faces rightward. The user may put the left hand on the right controller 3 with the front portion facing frontward, or may put the right hand on the left controller 4 with the front portion facing frontward.

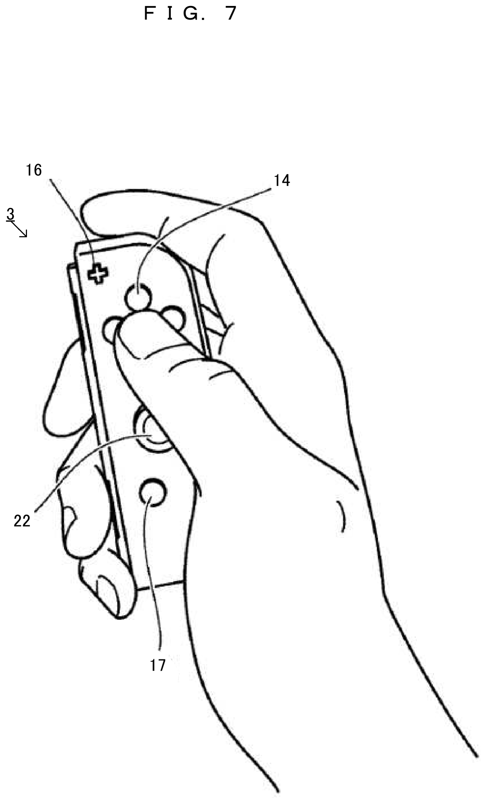

FIG. 7 is a schematic view showing an example of a state where the user operates the right controller 3 while grasping the right controller 3 by the right hand in a longitudinal holding manner. As shown in FIG. 7, in a state where the right controller 3 is detached from the main body apparatus 2, the right controller 3 can be used by being grasped such that the longitudinal direction of the right controller 3 is along the up-down direction or the front-rear direction for the operating user. Also, when the user uses the left controller 4 by the left hand in a state where the left controller 4 is detached from the main body apparatus 2, the user can use the left controller 4 in the same manner.

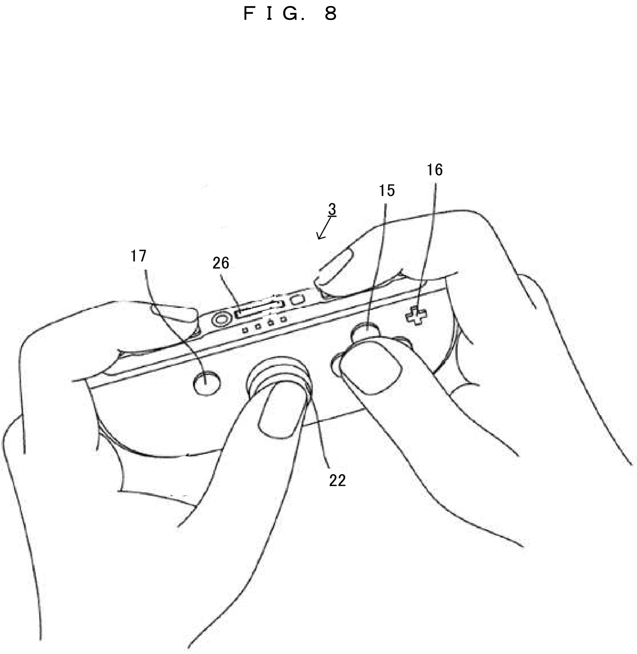

FIG. 8 is a schematic view showing an example of a state where the user operates the right controller 3 while grasping the right controller 3 by both hands in a horizontal holding manner. As shown in FIG. 8, in a state where the right controller 3 is detached from the main body apparatus 2, the right controller 3 is used such that the longitudinal direction of the right controller 3 is along the left-right direction for the operating user. The right controller 3 is grasped by one hand of the user on one side in the longitudinal direction (one side in the front-rear direction) and grasped by the other hand of the user on the other side. For example, the index fingers of both hands of the user are put on the bottom portion side of the right controller 3. Also, when the user uses the left controller 4 by both hands in a state where the left controller 4 is detached from the main body apparatus 2, the user can use the left controller 4 in the same manner.

One user may use the right controller 3, and another user may use the left controller 4. One user may use the right controller 3 by the right hand and use the left controller 4 by the left hand, at the same time. Each of two users may use the right controller 3 and the left controller 4. That is, more than two controllers may be connected to the main body apparatus 2. For example, each of four users may use one or two controllers.

Next, information processing in the exemplary embodiment will be described. In the following, a description will be given with the case where the right controller 3 is used as an example. The same applies to the case where the left controller 4 is used, and thus the description of such a case is omitted except for some matters.

### [Example of functional blocks of information processing system]

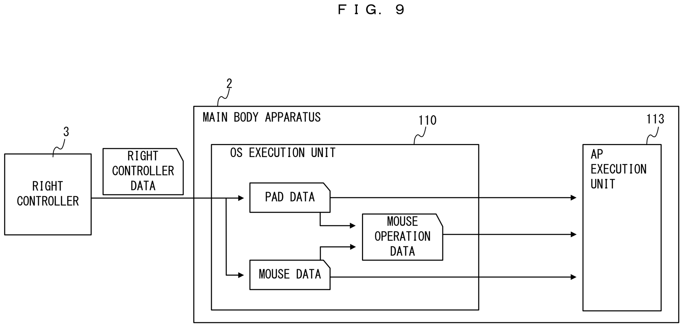

FIG. 9 is a diagram showing an example of functional blocks of an information processing system 1. As shown in FIG. 9, the main body apparatus 2 has an OS execution unit 110 and an application (sometimes referred to as "AP") execution unit 113. The application is, for example, a game application. When the game application is executed, for example, game processing is realized. The game application may include a game menu application that executes a menu for the user to select game processing to be executed. The application may be, for example, a communication application, a drawing application, a map application, or the like. The processing of each unit, etc., will be described below.

As shown in FIG. 9, right controller data is transmitted from the right controller 3 to the OS execution unit 110. This data includes, for example, image clarity data, dy/dz data, inertial sensor value data, button input data, and stick input data. The data transmitted from the right controller 3 to the OS execution unit 110 may include data other than these or may not necessarily include any of these data.

The image clarity data is data indicating the clarity of a mouse sensor image. The image clarity data is data calculated by the mouse sensor 24. The image clarity data is calculated based on the degree of brightness of the mouse sensor image and/or the degree regarding the number of feature points in the mouse sensor image, for example. The degree of brightness of the mouse sensor image or the degree regarding the number of feature points in the mouse sensor image may be directly used as the image clarity data. In addition, the image clarity data may be calculated based on another element. If the clarity indicated by the image clarity data is equal to or greater than a predetermined value, it can be estimated that the opening 23 of the mouse sensor 24 is closed by a placement surface or the like. Other data may be used instead of the data indicating the clarity of the mouse sensor image, if the other data is data from which it can be estimated that the opening 23 of the mouse sensor 24 is closed.

The dy/dz data is output data of the mouse sensor 24. When the opening 23 of the mouse sensor 24 is closed by a placement surface or the like, the dy/dz data is data indicating, for example, a movement distance per frame time in the y-axis direction and the z-axis direction in the coordinate system of the right controller 3 (i.e., the yz plane; see FIG. 2) relative to the placement surface or the like. The "dy/dz data" is merely a term for identification and may be referred to as "dx/dy data" or the like. The same applies to the other data.

The inertial sensor value data is data outputted from the inertial sensor of the right controller 3 and is, for example, data that allows calculation of accelerations in the x, y, and z-axis directions (see FIG. 2) in the coordinate system of the right controller 3 and angular velocities around the x, y, and z axes. For example, the orientation, movement, etc., of the right controller 3 can be calculated using the inertial sensor value data.

The button input data is data indicating operations performed on each button 95. The stick input data is data indicating operations performed on the stick 22 of the right controller 3. The stick input data indicates the two-dimensional position of the stick 22. As long as the two-dimensional position can be indicated, the content of the stick input data is not limited and may indicate, for example, the changes in the x and y axes from the initial position or the distance and angle from the initial position.

The OS execution unit 110 generates pad data and mouse data, based on the right controller data. In addition, the OS execution unit 110 generates mouse operation data, based on the pad data and the mouse data. A part or all of the generation of these data may be constantly executed or may be executed in response to a request from the AP execution unit 113, for example.

The AP execution unit 113 executes an application. The AP execution unit 113 may execute multiple applications simultaneously. The AP execution unit 113 may request one or more of the pad data, the mouse data, and the mouse operation data from the OS execution unit 110, as an example, depending on the application being executed. For example, the AP execution unit 113 requests each data individually from the OS execution unit 110 using an API (Application Programming Interface) corresponding to each data. The AP execution unit 113 may change the data to be requested, depending on the application being executed or the state of the application, or may not necessarily request any data at all. For example, the AP execution unit 113 may make one request to the OS execution unit 110, and the AP execution unit 113 may make a response including two or more of the pad data, the mouse data, and the mouse operation data. The AP execution unit 113 may request data other than these data from the OS execution unit 110 or may be unable to request any of these data.

The pad data has, for example, a data structure including information indicating operations on each button and the stick 22. The pad data has, for example, a data structure including information indicating operations on the A button 12, the B button 13, the X button 14, the Y button 15, the + (plus) button 16, the R button 20, the ZR button 21, the stick 22 (push), the button 18, and the button 19. The pad data has, for example, a data structure including information indicating whether or not the R button 20 has been pressed. The pad data has, for example, a data structure including information indicating an operation for the two-dimensional position of the stick 22. Information about operations on the home button 17 and information about the inertial sensor are not included in the pad data and may be included in another response. Similarly, the information indicating the operation for the two-dimensional position of the stick 22 is not included in the pad data and may be included in another response. For the left controller 4 as well, the pad data similarly has a data structure including information indicating operations on each button and operations on the stick 22. The pad data may not necessarily include information about operations on the capture button 37.

The mouse data has, for example, a data structure including dy/dz data and closure data. The dy/dz data has a data structure including information indicating movement distances per frame time in the y-axis direction and the z-axis direction in the coordinate system of the right controller 3 (i.e., the yz plane; see FIG. 2). The dy/dz data is generated based on the dy/dz data included in the right controller data. These may be the same data. That is, even if certain data and other data are the same data, it may be said that the other data is generated from the certain data. The closure data has a data structure including information indicating whether or not the opening 23 of the right controller 3 is closed. As an example, the closure data may include a value indicating the closure of the opening 23 when either the dy/dz data indicates the movement of the controller or the image clarity data indicates that the image is clear.

The processing executed by the AP execution unit 113 based on the acquired data is not limited. As an example, the AP execution unit 113 may control the position of a pointer, based on the acquired dy/dz data, depending on the application being executed. The AP execution unit 113 may switch, for example, between display and non-display of the pointer, based on the acquired closure data.

The mouse operation data has, for example, a data structure including x/y coordinate data, x/y coordinate range data, wheel data, mouse button data, and attribute data.

The x/y coordinate data is generated based on the dy/dz data included in the mouse data. The x/y coordinate data may be generated based on the dy/dz data included in the right controller data. The x/y coordinate data has a data structure including information indicating the two-dimensional coordinates of the pointer. For example, the x/y coordinate data may be generated by adding a value based on newly acquired dy data to the previous x coordinate data and adding a value based on newly acquired dz data to the previous y coordinate data.

The x/y coordinate range data has a data structure including information indicating a range of values that x/y coordinates can take. The x/y coordinate range data may be set based on a request from the AP execution unit 113.

The AP execution unit 113 may control, for example, the position of the pointer, based on the acquired x/y coordinate data.

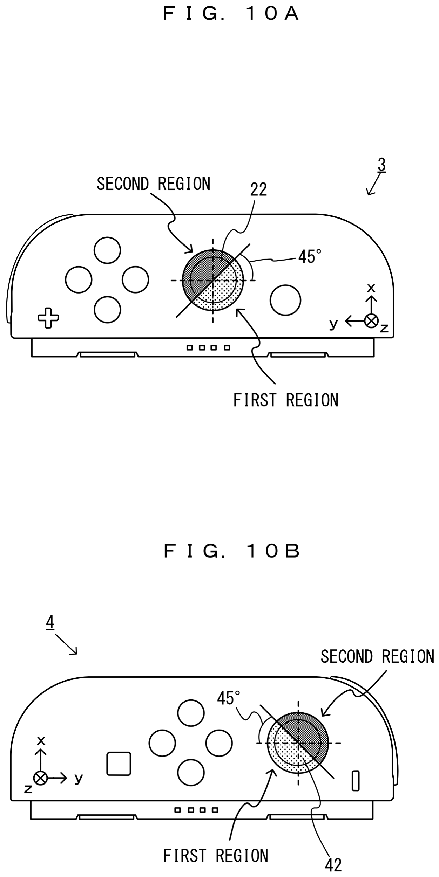

The wheel data is generated based on the stick input data. FIG. 10A is a schematic diagram showing a state when the right controller 3 is operated as a mouse. Depending on the application, it is considered to scroll a page or a bar or move up and down an item to be selected, in response to an operation on the stick 22, as with an operation on the wheel of a general mouse. In this case, when the user is to perform an operation corresponding to an operation of rotating the wheel rearward, that is, for example, an operation for scrolling a page downward, the direction of tilting the stick 22 may differ depending on the user. For example, a certain user may tilt the stick 22 rearward (in the y-axis negative direction), while another user may tilt the stick 22 downward (in the x-axis negative direction). The same applies to the opposite case. Therefore, in the exemplary embodiment, the OS execution unit 110 generates wheel data indicating whether the position of the stick 22 is in a first region including the rear side and the lower side from the initial position or in a second region including the front side and the upper side from the initial position, based on the stick input data included in the right controller data. The wheel data has a data structure including information indicating which region the two-dimensional position of the stick 22 is in. The first region and the second region may be set symmetrically with respect to the initial position. The first region and the second region may be set with a boundary located therebetween. The boundary may be, for example, a straight line passing through the center of the stick 22 and extending from the frontward and downward 45-degree direction to the rearward and upward 45-degree direction. When the position of the stick 22 is on the boundary line, it can be determined as appropriate whether this position is treated as being in the first region, as being in the second region, or as being neither in the first region nor in the second region. In the exemplary embodiment, the first region and the second region are partial circles centered on the initial position of the stick 22.

For example, the wheel data may indicate a negative value when the position of the stick 22 is in the first region and may indicate a positive value when the position of the stick 22 is in the second region. That is, the wheel data may indicate the direction of wheel operation on the wheel of a general mouse. The wheel data may have, for example, a data structure including information indicating a value out of two values (which may include a case where none of the values is indicated). As an example, the positive or negative value corresponding to the direction of wheel operation may be indicated by a sign, may be indicated by a character string such as "positive" and "negative", or may be indicated by an appropriate flag.

The wheel data has a data structure including information indicating a two-dimensional position, that is, an operation amount, from the initial position of the stick 22. The wheel data may have, for example, a data structure including information indicating a value corresponding to the amount of rotation of the wheel of a general mouse. There are many general mice that transmit a change amount of 120 each time a 15-degree rotation is made, for example. If a device to which a mouse is connected acquires a change amount every frame, since the speed of a mouse wheel operation is slow relative to the one-frame time, the device acquires values of 0, 120, 0, 0, 0, ..., for example. On the other hand, if a value indicated by the wheel data when the stick 22 is tilted to the limit is, for example, defined as 120, the AP execution unit 113 may acquire wheel data indicating values of 120, 120, 120, ... in consecutive frames. Such values may be an excessive amount of wheel rotation (or wheel rotation speed) for the application executed by the AP execution unit 113. Therefore, in the exemplary embodiment, the value indicated by the wheel data when the stick 22 is tilted to the limit is set to a value smaller than 120, for example, a value of 1 to 50, a value of 5 to 30, or a value of 15 to 20. For example, even if the main body apparatus 2 acquires the tilting of the stick 22 on a frame-by-frame basis or less, the wheel data to be generated may reflect the value only once every few frames. That is, by reducing the frequency of reflection in the wheel data, a value corresponding to the tilting amount of the stick 22 may be made close to a value in a general mouse, for example. The wheel data may not necessarily include information indicating the change amount of the wheel.

FIG. 10B is a schematic diagram showing a state when the left controller 4 is operated as a mouse. As in the right controller 3, wheel data is generated based on the stick data included in the left controller data. The wheel data, for example, may indicate a negative value when the position of the stick 42 is in a first region including the rear side and the lower side from the initial position and may indicate a positive value when the position of the stick 42 is in a second region including the front side and the upper side from the initial position.

The AP execution unit 113 may switch a selected item, may increase or decrease a number, or may scroll a page or a bar, based on the acquired wheel data.

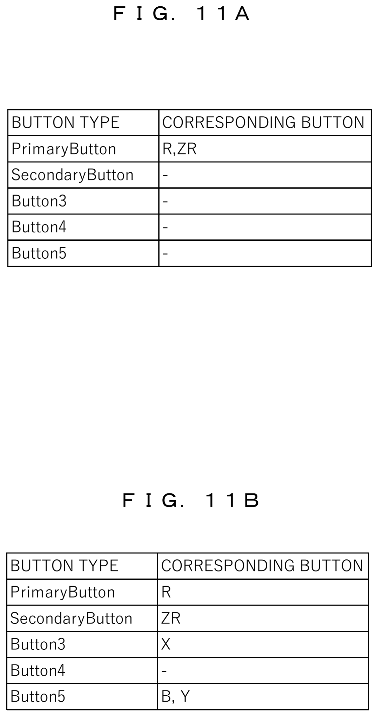

The mouse button data is generated based on the button input data. The mouse button data has a data structure including information indicating an operation for a button type. The button type is an item to which each button can correspond. FIG. 11A shows the button type items and the corresponding buttons included in the button input data based on the right controller data. For example, the R button 20 and the ZR button 21 are caused to correspond to button type = PrimaryButton. When either the R button 20 or the ZR button 21 is pressed, the mouse button data includes data having a data structure including information indicating that PrimaryButton is ON. No corresponding button is set for the other button types, and thus, regardless of which button is pressed, none of the button types included in the mouse button data indicate ON. FIG. 11B shows an example in which different corresponding buttons are set for the button types. In this example, when the ZR button 21, the X button 14, or the B button 13 is pressed, mouse button data including information indicating SecondaryButton, Button3, or Button5 is ON is generated. As described above, it may be possible to change which button corresponds to each button type. This change may be executed based on a request from the AP execution unit 113 or may be executed spontaneously by the OS execution unit 110 or based on a user operation. The default correspondence between each button type and each button is not limited, and may be, for example, the correspondence shown in FIG. 11A.

It may be possible to cause all buttons to correspond to each button type, or it may not be possible to cause some buttons to correspond to each button type. For example, regarding the mouse button data of the right controller 3, the buttons that can be caused to correspond to each button type may be the A button 12, the B button 13, the X button 14, the Y button 15, the + (plus) button 16, the R button 20, the ZR button 21, and the stick 22 (push). That is, it may not be possible to cause the button 18 and the button 19 to correspond to each button type. This is because these buttons face a desk or the like in close proximity to the desk or the like when a mouse operation is performed and are not expected to be operated by the user. Therefore, in this case, when the button 18 or the button 19 is pressed, the AP execution unit 113 can recognize the pressing by acquiring the pad data but cannot recognize the pressing from the mouse operation data. The same may apply to the left controller 4.

The AP execution unit 113 may execute various kinds of processing such as decision, cancellation, selection, attack, and jump, based on the acquired mouse button data.

The attribute data has, for example, a data structure including data indicating a target state and data indicating whether or not the current state is a state of a mouse operation on a horizontal surface.

The data indicating the target state has a data structure including information indicating whether the application that has been executed by the AP execution unit 113 and has requested the mouse operation data including the attribute data is an operation target. For example, when the application is in a background execution state or when a menu that is more preferentially operated by the user (for example, a quick setting menu) is displayed on the display, the data indicating the target state indicates False.

The AP execution unit 113 may switch, for example, between display and non-display of the pointer, based on the acquired attribute data.

The data indicating whether or not the current state is the state of a mouse operation on a horizontal surface has, for example, a data structure including information indicating that the bottom portion of the controller faces in the direction of gravity and the dy/dz data indicates the movement of the controller.

For example, when the state of a mouse operation on a horizontal surface is False, even if the dy/dz data indicates the movement of the controller, there is a possibility that the user has merely covered the opening 23 with their finger while grasping the controller, and thus the AP execution unit 113 may not necessarily move or display the pointer.

The AP execution unit 113 can use the pad data, the mouse data, and the mouse operation data in the application being executed. In addition, the timing when the AP execution unit 113 acquires each data is not limited. For example, the AP execution unit 113 may constantly acquire these three data. For example, in a scene in which the application being executed does not support a mouse operation, the AP execution unit 113 may acquire the pad data but may not necessarily acquire the mouse operation data and the mouse data. For example, in a scene in which the application being executed supports a mouse operation, the AP execution unit 113 may acquire the mouse operation data but may not necessarily acquire the pad data and the mouse data. The AP execution unit 113 may execute application processing, based on the x/y coordinate data or mouse button data included in the mouse operation data, for example.

For example, in a scene in which the application being executed supports a mouse operation, the AP execution unit 113 may acquire the pad data in addition to the mouse operation data. For example, it is assumed that in the mouse button data, the button types and the corresponding buttons are caused to correspond to each other as shown in FIG. 11B. In this case, when the A button of the right controller 3 is pressed, the AP execution unit 113 cannot acquire the pressing from the mouse button data but can acquire the pressing from the pad data. As described above, the AP execution unit 113 may use each data complementarily. For example, when the R button 20 is pressed, the AP execution unit 113 can acquire the pressing in a format of Rbutton = ON, based on the data format of the pad data, and can also acquire the pressing in a format of PrimaryButton = ON, based on the data format of the mouse operation data. Similarly, the AP execution unit 113 may acquire the mouse operation data and the mouse data, and in this case, the AP execution unit 113 can acquire the x/y coordinate data from the mouse operation data and can also acquire the dy/dz data from the mouse data. As described above, whether the AP execution unit 113 acquires any or all of the pad data, the mouse data, and the mouse operation data, and how the AP execution unit 113 uses the acquired data may be determined based on the developer's intention, the state of the application, or the like.

In the exemplary embodiment, the controller is used in various ways as shown in FIG. 6 to FIG. 8. Therefore, by allowing the application to acquire necessary data if necessary, smooth behavior of the application, appropriate behavior of the application, or ease of designing the application can be achieved. As an example, depending on the application for which the controller is grasped and operated as shown in FIG. 7 or FIG. 8 or the state of the application, the AP execution unit 113 may not necessarily acquire the mouse operation data and the mouse data. On the other hand, in the same situation, the AP execution unit 113 may acquire the mouse operation data and the mouse data. For example, the AP execution unit 113 may acquire the mouse operation data and monitor the state of a mouse operation on a horizontal surface included in the attribute data. The application executed by the AP execution unit 113 may display a pointer when it is determined that the current state becomes the state of a mouse operation on a horizontal surface or may perform an operation on an object or the like, based on the mouse button data rather than the pad data.

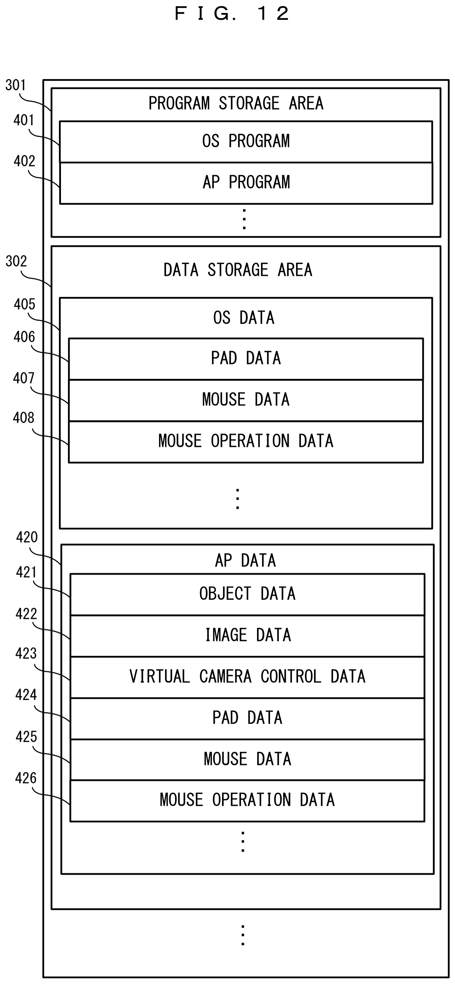

Next, various data stored in the memory will be described. FIG. 12 shows an example of data stored in the memory of the main body apparatus 2. In FIG. 12, a program storage area 301 and a data storage area 302 are shown separately for convenience. In reality, these areas do not need to be physically divided. In addition, more detailed storage areas or other storage areas may be conceptually provided. The program storage area 301 includes an OS program 401 and an AP program 402. The AP program 402 may include game application programs, communication application programs, etc.

The data storage area 302 includes OS data 405 generated or used by the OS program 401 and AP data 420 generated or used by the AP program 402. In the exemplary embodiment, the OS data 405 and the AP data 420 are stored separately, but the OS data 405 and the AP data 420 may not necessarily be stored separately.

The OS data 405 includes pad data 406, mouse data 407, and mouse operation data 408. These data are the data described above.

The AP data 420 includes object data 421, image data 422, virtual camera control data 423, pad data 424, mouse data 425, and mouse operation data 426.

The object data 421 is data for objects to be placed in a virtual space and is, for example, data for player characters, opponent characters, ground, menus, cursors, etc.

The image data 422 is image data for animation images, backgrounds, virtual effects, etc.

The virtual camera control data 423 is data for controlling a virtual camera placed in the virtual space to capture an image of the virtual space.

The pad data 424, the mouse data 425, and the mouse operation data 426 are based on the pad data 406, the mouse data 407, and the mouse operation data 408 acquired by the AP execution unit 113 and the OS execution unit 110. These data do not need to be strictly identical.

The above various data are merely examples. Other data may be included, and some of the data may not necessarily be included. Also, for example, if the AP execution unit 113 generates new data based on the mouse operation data 426, this data can be included in the AP data 420. As described above, the various data do not need to be constantly present, and addition, deletion, change, or the like may be performed thereon.

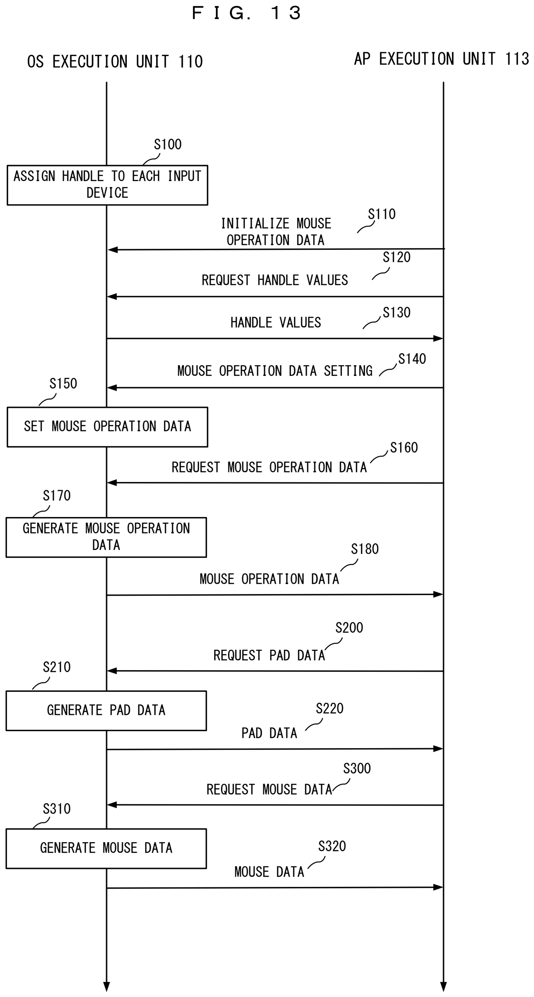

FIG. 13 is an example of a sequence diagram showing the processing according to the exemplary embodiment. Hereinafter, some of processes in the exemplary embodiment will be described. Each process may include another process, and a part of the process may be omitted. The order of processing steps is merely an example. Some processing steps may be executed at the same time or may be executed in a reverse order. The respective processes are described as separate processes for convenience but may be an integrated process. The following processes may be executed at predetermined intervals (for example, every processing frame or every 1/30 second).

First, the OS execution unit 110 assigns a handle value to each controller connected to the main body apparatus 2 (S100). As for the handle value, one handle value may be assigned to one controller, or, for example, a handle value corresponding to the mouse operation data and a handle value corresponding to the mouse data may be separately assigned to one controller. For example, to a controller not having a mouse function, a handle value corresponding to the pad data may be assigned, but handle values corresponding to the mouse operation data and the mouse data may not necessarily be assigned. The handle value may be a number that increases in the order in which the controllers are connected to the main body apparatus 2. As the handle value, a different value may be assigned even to the same controller when the controller is disconnected from the main body apparatus 2 and then reconnected thereto.

The AP execution unit 113 requests the OS execution unit 110 to initialize the mouse operation data (S110). At this time, the AP execution unit 113 may give an argument for specifying the range of x and y coordinates. For example, if the AP execution unit 113 is to render an image of the application being executed, at a resolution of 1080p, a width of 1920 for the x coordinate and a width of 1080 for the y coordinate may be specified. Accordingly, for example, the mouse operation data can specify x and y coordinates in the same 1080p coordinate system. Initialization may also be requested for the pad data and the mouse data.

The AP execution unit 113 requests the handle values from the OS execution unit 110 (S120), and the OS execution unit 110 passes the handle values to the AP execution unit 113 (S130). The handle values may be requested collectively or individually. For example, the handle value used when requesting the mouse operation data and the handle value used when requesting the mouse data may be requested separately.

The AP execution unit 113 requests the OS execution unit 110 to set the mouse operation data (S140), and the OS execution unit 110 performs the setting (S150). As an example, in the mouse button data, the correspondence between each button type and each button may be set. As another example, widths for the x and y coordinates may be set. The setting may be executed for each type of controller. For example, the setting of the mouse button data for the right controller 3 and the setting of the mouse button data for the left controller 4 may be executed. In this case, even if the handle values are different, the same mouse button data setting may be applied if the type of controller is the same. The setting of the mouse button data may be executed for each handle value.

The AP execution unit 113 requests mouse operation data from the OS execution unit 110 (S160). At this time, which handle value corresponds to the mouse operation data to be requested from the OS execution unit 110 may be specified using the acquired handle value.

The OS execution unit 110 generates mouse operation data (S170). As with other processes, this generation may be performed at a different timing. For example, the generation process may be performed continuously. Alternatively, for example, individual data included in the mouse operation data may be generated constantly, and data that is a combination of these data may be generated in response to a request for mouse operation data from the AP execution unit 113.

The OS execution unit 110 passes the mouse operation data to the AP execution unit 113.

The AP execution unit 113 can request and acquire pad data and mouse data from the OS execution unit 110 (S200, S210, S220, S300, S310, S320). As for generation of each data, the timing thereof is not limited as with the process of generating the mouse operation data and the other processes.

As already described, as for each data, processes of acquisition, etc., may be performed using separate APIs, respectively, as an example. For example, initialization, handle requests, setting, and data requests related to mouse operation data may be performed through an API. The API may include execution of a process including a predetermined response, etc., in response to a predetermined request in accordance with predetermined rules, for example, but does not exclude having other meanings. The term API may not necessarily be used in the system or design.

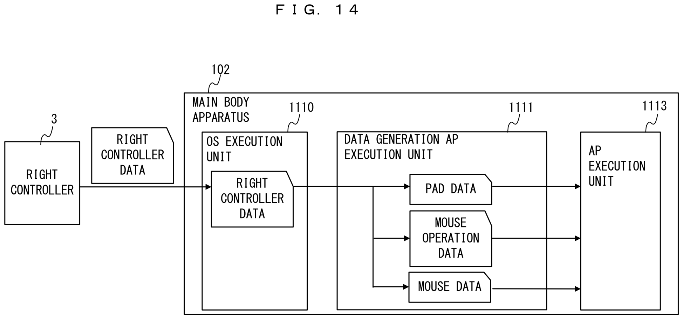

FIG. 14 illustrates a functional block diagram in an example of another information processing system. A main body apparatus 102 is, for example, a general-purpose personal computer. The main body apparatus 102 includes an OS execution unit 1110 that executes an OS. The main body apparatus 102 includes a data generation AP execution unit 1111 and an AP execution unit 1113. The OS execution unit 1110 acquires right controller data from the right controller 3 connected to the main body apparatus 102, as an example. The data generation AP execution unit 1111 executes a data generation application for generating pad data, mouse operation data, and mouse data, based on a part or all of the right controller data acquired from the OS execution unit 1110. The mouse operation data may be generated directly from the right controller data as shown or may be generated based on the pad data and the mouse data as in the embodiment described above. Then, the AP execution unit 1113 acquires a part or all of these data. As described above, for example, the data generation AP execution unit 1111 may be provided separately from the application execution unit 1113 which executes a game application or the like. An application such as a game application and the data generation application may be independent applications. A data generation application or a data generation function may also be installed in a platform application for executing an application such as a game application. Each data may be generated by a different application, and each of multiple steps in the generation may be executed by a different application. In addition, data outputted from the controller may be able to be acquired directly by the AP execution unit, etc., without being passed through the OS execution unit. Moreover, a game application or the like executed by the AP execution unit may generate data corresponding to mouse operation data, for example. As an example, the game application executed by the AP execution unit may generate wheel data, based on the position of the stick.

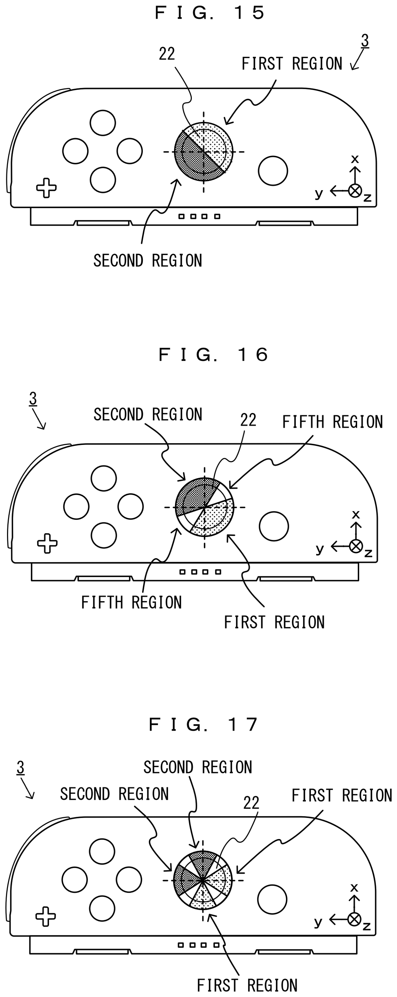

FIG. 15 is a diagram showing another example of a first region and a second region in which wheel data indicates a negative value and a positive value, respectively. In the following, the right controller is exemplified, but the same applies to the left controller. In this example, the first region includes the rearward and upward directions from the initial position, and the second region includes the frontward and downward directions from the initial position. In this case, the regions in the left controller may be set as shown in FIG. 10B. That is, in the case where the two-dimensional position of the stick is frontward or rearward in each of the left and right controllers, the positive or negative value may be different. As with the right controller in FIG. 15, the left controller may also be set such that the first region includes the rearward and upward directions from the initial position and the second region includes the frontward and downward directions from the initial position.

FIG. 16 is a diagram showing still another example. As shown in FIG. 16, a fifth region that does not belong to either the first region or the second region may be set between the first region and the second region. When the two-dimensional position of the stick is in the fifth region, the wheel data may indicate neither a positive value nor a negative value. In this case, the wheel data may not necessarily indicate the amount of wheel rotation. The fifth region is set symmetrically with respect to the initial position of the stick. The central angle of each fifth region may be, for example, 5 degrees to 60 degrees, or 20 degrees to 50 degrees.

FIG. 17 is a diagram showing still another example. As shown in FIG. 17, a plurality of first regions and a plurality of second regions may be set. In FIG. 17, one first region includes the downward direction from the initial position, and the other first region includes the rearward direction from the initial position. A fifth region may be set between these first regions. The same applies to the second regions. A fifth region may or may not be set between a first region and a second region.

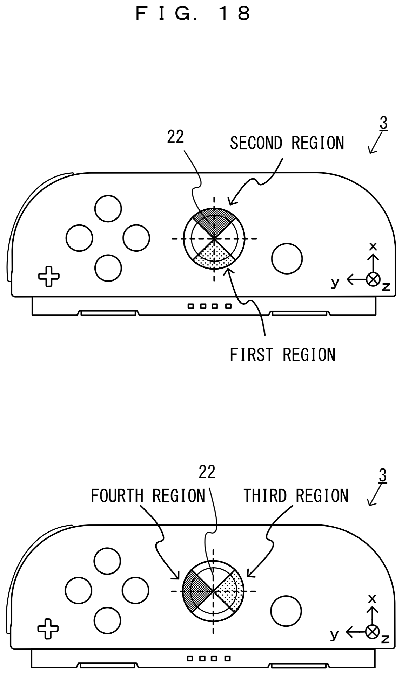

FIG. 18 is a diagram showing still another example. As shown in FIG. 18, the wheel data has a data structure including information indicating whether the two-dimensional position of the stick is in a first region or in a second region and information indicating whether the two-dimensional position of the stick is in a third region or in a fourth region. As an example, the wheel data has a data structure including wheel data 1 and wheel data 2. The wheel data 1 may indicate a negative value if the stick is in the first region, may indicate a positive value if the stick is in the second region, and may indicate a positive value or a negative value if the stick is not in either region. The wheel data 2 may indicate a negative value if the stick is in the third region, may indicate a positive value if the stick is in the fourth region, and may indicate a positive value or a negative value if the stick is not in either region. The first region includes positions below the initial position but does not include positions in the front-rear direction therefrom, the second region includes positions above the initial position but does not include positions in the front-rear direction therefrom, the third region includes positions in rear of the initial position but does not include positions in the up-down direction therefrom, and the fourth region includes positions in front of the initial position but does not include positions in the up-down direction therefrom. Each region may have, for example, a sector shape having a central angle of 90 degrees and spreading at 45 degrees to the left and right of each direction. In this case, the boundary of each region may or may not overlap. The AP execution unit can determine which region the wheel data to be used is for, depending on the processing of the application being executed. As an example, the AP execution unit may use the wheel data 1 in the above example when moving an object such as a bar that moves up and down on the screen, and may use the wheel data 2 in the above example when moving an object that moves left and right. Which of the up-down direction or the left-right direction these objects are moved in depends on the positive or negative value indicated by the wheel data, and is not limited.

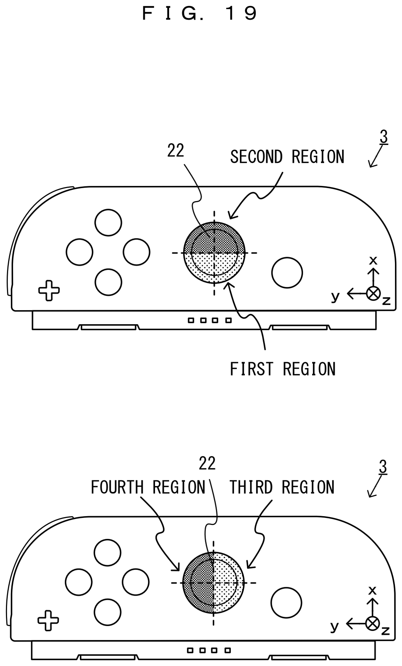

FIG. 19 is a diagram showing an example in which regions different from those in the example shown in FIG. 18 are set. Each region is semicircular. For example, a first region includes the lower side of the initial position. Specifically, the first region includes positions below a boundary passing through the initial position and extending in the front-rear direction. A second region is on a side opposite to the first region. A third region includes the rear side of the initial position. Specifically, the third region includes positions in rear of a boundary passing through the initial position and extending in the up-down direction. A fourth region is on a side opposite to the third region. As shown in FIG. 19, the third region overlaps the first region and the second region, and the fourth region overlaps the first region and the second region. For example, when the two-dimensional position of the stick is positioned at 45 degrees frontward and downward from the initial position, the wheel data 1 indicates a negative value, and the wheel data 2 indicates a positive value, as an example. The regions may overlap for the respective data included in the wheel data as described above.

In the above example, the wheel data includes the wheel data 1 and the wheel data 2, but these data may be independent data. In addition, these data may be independent of the mouse operation data. The AP execution unit may request the wheel data independently of the mouse operation data or may request the wheel data 1 and the wheel data 2 independently, for example. The wheel data may also include, for example, two wheel data, that is, wheel data corresponding to the example shown in FIG. 19 and wheel data corresponding to the example shown in FIG. 10A or FIG. 10B, or three or more wheel data.

The regions shown in FIG. 10A, FIG. 10B, and FIG. 15 to FIG. 19 are examples, and the setting of the regions is not limited. For example, the shapes of the regions are not limited to partial circles. For example, the sizes of the first region and the second region may be different. For example, the sizes of the first region and the third region may be different.

To the main body apparatus (for example, the main body apparatuses 2 and 102), for example, general-purpose mouse may be connectable. Also in the case where a general-purpose mouse is connected, mouse operation data may be generated based on output data from this mouse. For example, the AP execution unit may use a mouse operation data acquisition API. For example, by specifying a handle value assigned to a connected mouse or specifying a type indicating "general-purpose mouse" as a controller type, the AP execution unit may acquire mouse operation data based on output data from this mouse.

In the case where a general-purpose mouse is connected to the main body apparatus, buttons 1 and 2 (generally corresponding to a left-click button and a right-click button) among buttons 1 to 5 that a general-purpose mouse typically has may be defaulted to correspond to PrimaryButton among the button types in the mouse button data. In the above embodiment, the example in which the R button 20 and the ZR button 21 of the right controller 3 are defaulted to correspond to PrimaryButton has been described. The arrangement of these buttons in the case where the right controller 3 is operated as a mouse is similar to the arrangement of the button 1 and the button 2 in the general-purpose mouse, so that, by making such a default setting, a user experience similar to that when operations are performed using the right controller 3 and the left controller 4 can be provided even when the general-purpose mouse is used. The buttons 1 to 5 of the general-purpose mouse may be defaulted to correspond to the button types, PrimaryButton to Button5, respectively.

In addition, for example, the wheel data may correspond to an operation on the mouse wheel of the mouse. For example, as for the attribute data, it may be always indicated that the current state is not the state of a mouse operation on a horizontal surface, or data indicating this state may not necessarily be included. In any case, the content of each data may be changed as appropriate.

As described above, the AP execution unit can acquire data as the same mouse operation data when a general-purpose mouse is connected, as well as when the right controller or the left controller is connected, so that it is easy to execute appropriate processing, and the development burden on the application developer is reduced. Information indicating a controller type may be included when requesting mouse operation data, or information indicating a controller type may be included in a response.

Furthermore, when a general-purpose mouse is connected to the main body apparatus, the OS execution unit may generate general-purpose mouse data, based on output data from this mouse, and the AP execution unit may request the general-purpose mouse data. For example, the AP execution unit may use a general-purpose mouse data acquisition API. The general-purpose mouse data may have, for example, a data structure including dx/dy data, x/y coordinate data, and button data. The dx/dy data may correspond, for example, to the dy/dz data in the mouse data. The AP execution unit may acquire one of the mouse operation data and the general-purpose mouse data or may acquire both. As an example, when the AP execution unit requests a mouse operation data setting and sets a range of x/y coordinates, there is a possibility that the x/y coordinate data included in the general-purpose mouse data and the x/y coordinate data included in the mouse operation data indicate different coordinates. That is, for example, the AP execution unit may be unable to set the range of the x/y coordinate data included in the general-purpose mouse data. In addition, for example, when the speed of a mouse pointer can be set as a main body apparatus setting, the x/y coordinate data included in the mouse operation data may reflect this speed. Moreover, the button data included in the general-purpose mouse data may indicate the buttons 1 to 5. As described above, the AP execution unit may be able to acquire mouse operations and button operations on the general-purpose mouse, based on the data format of the general-purpose mouse data, or may be able to acquire such operations, based on the data format of the mouse operation data.

The AP execution unit may be able to acquire merged mouse operation data based on input data from a plurality of controllers. For example, the AP execution unit may specify the right controller and the left controller as controller types. Then, the main body apparatus may generate mouse operation data, based on the right controller data from the right controller and the left controller data from the left controller. For example, x/y coordinate data corresponding to dx/dy data obtained by combining the dx/dy data of the right controller and the dx/dy data of the left controller may be calculated. Also, for example, when mouse button data is set for each of the right controller and the left controller, if the button, of any of the controllers, corresponding to PrimaryButton is pressed, the merged mouse operation data may indicate that PrimaryButton has been pressed.

The merged mouse operation data may be generated based on input data from all controllers of a specified controller type. That is, when two right controllers and two left controllers are connected to the main body apparatus and the right controllers and the left controllers are specified as controller types, the merged mouse operation data may be generated based on input data from these four controllers. Alternatively, when only the right controllers are specified as a controller type, the merged mouse operation data may be generated based on input data from the two right controllers. The controller types may include a type indicating a general-purpose mouse. As for the generation of the merged mouse operation data, instead of specifying the controller type, a handle value may be specified or another value may be specified, or the merged mouse operation data may be generated based on input data from all connected controllers without specifying anything.

The merged mouse operation data may be generated in any manner, and, for example, may be generated directly from input data from each controller, or may be generated using mouse operation data generated for each controller.

As described repeatedly, each data is an example, the content thereof is not limited, and other data may be generated or acquired. For example, the mouse operation data may include the elapsed time from the previous sampling. For example, the elapsed time may become longer if a packet loss occurs between the controller and the main body apparatus. In addition, for example, the mouse operation data may include the sampling count. For example, if the frequency at which the mouse operation data is updated in the main body apparatus is higher than the frequency at which the AP execution unit requests the mouse operation data from the OS execution unit, the AP execution unit can recognize how many times the mouse operation data has been updated from the previous acquisition to the current acquisition of the mouse operation data, by confirming this sampling count. These data may also be included in the mouse data and the pad data.

The right controller 3, the left controller 4, and the general-purpose mouse are examples of the input device. The input device may not necessarily be attached to and detached from the main body apparatus 2, may not necessarily include a mouse sensor, may not necessarily include a stick, or may be connectable to an apparatus other than the main body apparatus 2, for example. For example, the right controller 3 may include a wheel. The wheel may be provided between the R button 20 and the ZR button 21, for example. Alternatively, the R button 20 may have a wheel function. The same applies to the left controller 4. In the case where the controller includes a wheel and a stick, the wheel data included in the mouse operation data may be based on an operation on one of the wheel and the stick or may be based on operations on both.

For example, although the mouse button data, the state data, etc., are shown as examples of the mouse operation data, the OS execution unit does not have to pass all of these data in response to a request for mouse operation data from the AP execution unit and may pass, for example, only data that can be acquired or generated, in response to such a request.

Even when data are described using the same terms, the respective data do not have to be identical. At least, if certain information is substantially conveyed as certain data and other data, these data may be regarded as being identical.

The name of each data does not limit the range indicated by the data. For example, the mouse operation data does not mean data acquired only when the AP execution unit executes an application using a mouse operation. Also, for example, the mouse operation data may be generated based on input data from a controller that does not have a mouse function. The same applies to the names of other elements.

The generation of each data may be executed by the input device.

The game system is an example of an information processing system, and the information processing system may be a system in which games are not executed.

For example, when a "processor of an information processing system" is recited, the processor may mean one or more processors in one apparatus such as a main body apparatus or may mean some or all of one or more processors included in each of multiple apparatuses such as a main body apparatus and a controller or a main body apparatus, a controller, and a server. The same applies to the case where a "memory of an information processing system" is recited and the case where another component is recited.

The program that causes a computer to execute each process may be a single program or may be a program group including a plurality of programs. The "certain program" does not necessarily mean a single program and may include a program group. In addition, the entirety of the program does not need to be stored in one apparatus. The "certain program" may mean, for example, the totality of programs that are stored in a plurality of apparatuses included in the information processing system, respectively.

In an information processing system including a terminal-side apparatus and a server-side apparatus capable of communicating via a network, at least part of the series of processes described above may be executed by the server-side apparatus. The server may be composed of a plurality of information processing apparatuses, and the processes may be executed by the plurality of information processing apparatuses in a shared manner.

In an information processing system including a terminal-side apparatus and a server-side apparatus capable of communicating therewith via a network, at least some of the series of processes described above may be executed by the server-side apparatus. The server may be composed of a plurality of information processing apparatuses, and the processes may be executed by the plurality of information processing apparatuses in a shared manner.

While the exemplary embodiment and the modifications have been described, the description thereof is in all aspects illustrative and not restrictive. It is to be understood that various other modifications and variations may be made to the exemplary embodiment and the modifications.

## Claims

1. An information processing method comprising:
acquiring first data based on a two-dimensional operation position of a stick (22, 42) of an input device (3, 4) having a mouse sensor (24, 44) at a bottom portion thereof, the stick being provided at a side portion connected to the bottom portion; and
making a first response including second data generated based on the first data, in response to a first request from an application being executed, wherein
the second data indicates a value that
(i) has a greater absolute value as a two-dimensional operation position of the stick becomes farther from an initial position of the stick,
(ii) indicates a negative value when the two-dimensional operation position of the stick is within a first range, and
(iii) indicates a positive value when the two-dimensional operation position of the stick is within a second range on the opposite side of the first range across the initial position.

2. The information processing method according to claim 1, wherein
the first range includes a two-dimensional operation position when the stick is operated from the initial position in a downward direction toward the bottom portion, and
the second range includes a two-dimensional operation position when the stick is operated from the initial position in an upward direction opposite to the downward direction.

3. The information processing method according to claim 2, wherein
the first range includes a two-dimensional operation position when the stick is operated from the initial position in one direction in a front-rear direction perpendicular to an up-down direction, and
the second range includes a two-dimensional operation position when the stick is operated from the initial position in another direction in the front-rear direction.

4. The information processing method according to claim 3, wherein
the first range is included on one side of a straight line passing through the initial position of the stick and inclined by 45 degrees from a straight line connecting the upward direction and the downward direction, and
the second range is included on another side of the straight line.

5. The information processing method according to claim 4, wherein a two-dimensional position of the stick on the one side of the straight line is in the first range, and a two-dimensional position of the stick on the other side of the straight line is in the second range.

6. The information processing method according to claim 2, wherein
the first response includes third data generated based on the first data,
the third data indicates a value that
(i) has a greater absolute value as a two-dimensional operation position of the stick becomes farther from the initial position of the stick,
(ii) indicates a negative value when the two-dimensional operation position of the stick is within a third range, and
(iii) indicates a positive value when the two-dimensional operation position of the stick is within a fourth second range on the opposite side of the third range across the initial position,
the third range includes a two-dimensional operation position when the stick is operated from the initial position in one direction in a front-rear direction perpendicular to an up-down direction, and
the fourth range includes a two-dimensional operation position when the stick is operated from the initial position in another direction in the front-rear direction.

7. The information processing method according to claim 6, wherein
a part of the first range and a part of one of the third range and the fourth range overlap, and
a part of the second range and a part of the other of the third range and the fourth range overlap.

8. The information processing method according to claim 6, wherein the first range, the second range, the third range, and the fourth range do not overlap.

9. The information processing method according to claim 1, further comprising generating the second data, based on the first data, every generation period while the two-dimensional operation position of the stick is the same.

10. The information processing method according to claim 1, further comprising making the first response in response to the first request from a game application being executed.

11. The information processing method according to claim 1, further comprising making a second response including fourth data indicating the two-dimensional operation position of the stick, in response to a second request from the application being executed.

12. The information processing method according to any one of claims 1 to 11, further comprising acquiring the first data of the input device not including a mouse wheel.

13. An information processing system comprising means for carrying out the method described in any one of claims 1 to 12.

14. A computer program comprising instructions that, when the program is executed by a computer, cause the computer to carry out the method described in any one of claims 1 to 12.
